# EUROPÄISCHE PATENTANMELDUNG

(11) **EP 4 187 846 A1**
(43) Veröffentlichungstag der Anmeldung: **31.05.2023**
(21) Anmeldenummer: 21211263.5
(22) Anmeldetag: 30.11.2021
(51) Int. Cl.: H04L 9/40, H04L 9/32

(54) **STEUERUNG EINES ZUGRIFFS AUF EIN GERÄT**

(71) Anmelder: Siemens Aktiengesellschaft, 80333 München (DE)
(72) Erfinder: Morra, Carlos, 81541 München (DE)
(74) Vertreter: Siemens Patent Attorneys

(57) **Zusammenfassung**

Die Erfindung betrifft ein computerimplementiertes Verfahren zum Steuern eines Zugriffs auf ein erstes Gerät (DEV1) durch ein zweites Gerät (DEV2) oder durch einen Nutzer (USR) mit folgenden Verfahrensschritten:
a) Bereitstellen eines überprüfbaren Identifikationsnachweises (CRED1) des ersten Geräts (DEV1), wobei der überprüfbare Identifikationsnachweis (CRED1) von einer Ausstellungseinheit (ORG1, ORG2) eines verteilten Datenbanksystems (NW) ausgestellt ist,
b) Verifizieren der Identität des ersten Geräts (DEV1) anhand des Identifikationsnachweises (CRED1)
- durch das zweite Gerät (DEV2) oder durch den Nutzer (USR), wobei der überprüfbare Identifikationsnachweis (CRED1) mittels eines ersten öffentlichen, kryptographischen Schlüssels und eines zugehörigen, ersten Nachweisschemas verifiziert wird, wobei der erste öffentliche, kryptographische Schlüssel in dem verteilten Datenbanksystem gespeichert ist,
- oder mittels eines Zero-Knowledge-Beweises durch das verteilte Datenbanksystem (NW),

c) Bereitstellen eines überprüfbaren Berechtigungsnachweises (CRED2) über eine Berechtigung des zweiten Geräts (DEV2) oder des Nutzers (USR), wobei der Berechtigungsnachweis (CRED2) von einer Ausstellungseinheit (ORG1, ORG2) des verteilten Datenbanksystems (NW) ausgestellt ist,
d) Verifizieren einer Authentizität und Integrität des überprüfbaren Berechtigungsnachweises (CRED2) mittels eines zweiten öffentlichen, kryptographischen Schlüssels und eines zugehörigen, zweiten Nachweisschemas, wobei der zweite öffentliche, kryptographische Schlüssel in dem verteilten Datenbanksystem gespeichert ist, oder mittels eines Zero-Knowledge-Beweises durch das verteilte Datenbanksystem (NW),
und
e) Steuern eines Zugriffs auf das erste Gerät (DEV1) bei erfolgreicher Verifikation der Identität des ersten Geräts (DEV1) und bei erfolgreicher Verifikation der Authentizität und Integrität des Berechtigungsnachweises (CRED2) des zweiten Geräts (DEV2) oder des Nutzers (USR).

## Beschreibung

Die vorliegende Erfindung betrifft ein computerimplementiertes Verfahren sowie ein System zum Steuern eines Zugriffs auf ein erstes Gerät durch ein zweites Gerät oder durch einen Nutzer.

Eine Wartung eines Geräts, beispielsweise durch einen Servicetechniker, benötigt in der Regel physikalischen und/oder logischen Zugriff auf das Gerät. Dazu sollte zum einen das Gerät identifiziert werden und zum anderen sollte der Servicetechniker und/oder dessen Servicegerät über eine ausreichende Zugriffsberechtigung verfügen. Ein ungeschützter Zugriff kann allerdings zu Problemen bei der Sicherheitsund/oder Vertraulichkeit insbesondere von Daten führen. Beispielsweise könnte ein Zugriff auf ein Gerät dazu genutzt werden, Schadsoftware zu installieren.

Deshalb ist es wünschenswert, einen Zugriff auf ein Gerät manipulationssicher zu gestalten und vorzugsweise erfolgte Zugriffe zu protokollieren.

Üblicherweise werden Authentifizierungsmechanismen zur Freigabe eines Zugriffs genutzt, wie zum Beispiel eine Passwortabfrage. Die Identifikation des jeweiligen zu wartenden Geräts wird in der Regel über eine Seriennummer, über eine Kennzeichnung einer Schnittstelle und/oder über einen maschinenlesbaren Code, wie zum Beispiel einen QR-Code, sichergestellt. All diese Zugriffsmechanismen müssen allerdings in der Regel zuvor festgelegt und zentral zum Abrufen bereitgestellt werden. Bei einer solchen zentralen Regelung ist eine Kontrolle über Berechtigungsnachweise und/oder Identifikationsnachweise nicht notwendigerweise gegeben.

Der Erfindung liegt das Problem zugrunde, eine Zugriffssteuerung auf ein Gerät zu verbessern.

Das obige Problem wird durch die Merkmale der unabhängigen Ansprüche gelöst. In den abhängigen Ansprüchen sind vorteilhafte Weiterbildungen der Erfindung dargestellt.

Vorgeschlagen wird ein computerimplementiertes Verfahren zum Steuern eines Zugriffs auf ein erstes Gerät durch ein zweites Gerät oder durch einen Nutzer mit folgenden Verfahrensschritten:
- Bereitstellen eines überprüfbaren Identifikationsnachweises des ersten Geräts durch das erste Gerät, wobei der überprüfbare Identifikationsnachweis von einer Ausstellungseinheit eines verteilten Datenbanksystems ausgestellt ist,
- Verifizieren der Identität des ersten Geräts anhand des Identifikationsnachweises
   - durch das zweite Gerät oder durch den Nutzer, wobei der überprüfbare Identifikationsnachweis mittels eines ersten öffentlichen, kryptographischen Schlüssels und eines zugehörigen, ersten Nachweisschemas verifiziert wird, wobei der erste öffentliche, kryptographische Schlüssel in dem verteilten Datenbanksystem gespeichert ist,
   - oder mittels eines Zero-Knowledge-Beweises durch das verteilte Datenbanksystem,
- Bereitstellen eines überprüfbaren Berechtigungsnachweises über eine Berechtigung des zweiten Geräts oder des Nutzers durch das zweite Gerät oder durch den Nutzer, wobei der Berechtigungsnachweis von einer Ausstellungseinheit des verteilten Datenbanksystems ausgestellt ist,
- Verifizieren einer Authentizität und Integrität des überprüfbaren Berechtigungsnachweises mittels eines zweiten öffentlichen, kryptographischen Schlüssels und eines zugehörigen, zweiten Nachweisschemas, wobei der zweite öffentliche, kryptographische Schlüssel in dem verteilten Datenbanksystem gespeichert ist, oder mittels eines Zero-Knowledge-Beweises durch das verteilte Datenbanksystem,
   und
- Steuern eines Zugriffs auf das erste Gerät bei erfolgreicher Verifikation der Identität des ersten Geräts und bei erfolgreicher Verifikation der Authentizität und Integrität des Berechtigungsnachweises des zweiten Geräts oder des Nutzers.

Es ist ein Vorteil der vorliegenden Erfindung, dass eine Steuerung eines Geräts durch ein weiteres Gerät bzw. einen Nutzer sicherer ausgestaltet werden kann. Insbesondere können die Nachweise, d.h. der Identifikationsnachweis sowie auch der Berechtigungsnachweis, nach der Methodik der Selbstbestimmten Identitäten (engl. Self-Sovereign-Identities, kurz: SSI) ausgestaltet und durch ein verteiltes Datenbanksystem verwaltet werden. Die Nachweise werden insbesondere dezentral gespeichert und verwaltet. Dadurch bleibt der Zugriff auf das Gerät und/oder auf Daten des Geräts privat und wird beispielsweise nicht zentral gespeichert und/oder überprüft. Folglich kann eine Vertraulichkeit der Nachweise gesichert werden.

Der Zugriff auf das Gerät kann insbesondere in granularer Weise ermöglicht werden. Die Nachweise werden kryptographisch verifiziert, so dass ein nicht autorisierter Zugriff und/oder Manipulationen verhindert werden können. Ein Nutzer bekommt somit lediglich Zugriff auf das Gerät, dessen Daten und/oder Schnittstellen, für welche der Nutzer berechtigt ist.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Einheit" oder einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter einem "verteilten Datenbanksystem" das beispielsweise auch als verteilte Datenbank bezeichnet werden kann, kann im Zusammenhang mit der Erfindung beispielsweise eine dezentral verteilte Datenbank, eine Blockkette (engl. Blockchain) bzw. ein Blockketten-Netzwerk, ein distributed Ledger, ein verteiltes Speichersystem, ein distributed ledger technology (DLT) based system (DLTS) , ein revisionssicheres Datenbanksystem, eine Cloud, ein Cloud-Service, eine Blockkette in einer Cloud oder eine Peer-to-Peer Datenbank verstanden werden.

Unter einem "Smart Contract" kann im Zusammenhang mit der Erfindung beispielsweise ein ausführbarer Programmcode verstanden werden. Der Programmcode wird beispielsweise durch das verteilte Datenbanksystem/durch die Knoten des verteilten Datenbanksystems ausgeführt. Der Smart Contract ist vorzugsweise in einer Transaktion eines verteilten Datenbanksystems (z. B. eine Blockkette) gespeichert, beispielsweise in einem Datenblock des verteilten Datenbanksystems.

Unter einem "Identifikationsnachweis" kann im Zusammenhang mit der Erfindung beispielsweise eine eindeutige Identifikationsnummer, eine eindeutige Markierung (z.B. QR-Code), ein Ausweis oder ähnliches verstanden werden, der das erste Gerät eindeutig identifiziert, d.h. dem ersten Gerät eindeutig zugeordnet ist.

Unter einem "Berechtigungsnachweis" kann im Zusammenhang mit der Erfindung beispielsweise ein Zugriffszertifikat, ein Berufszertifikat oder Zeugnis, verstanden werden, wobei der Berechtigungsnachweis insbesondere eine Zugriffsberechtigung für das zweite Gerät und/oder den Nutzer spezifiziert. Der Berechtigungsnachweis kann insbesondere auch eine Zeitund/oder Ortsabhängigkeit umfassen, d.h. beispielsweise nur für eine vorgegebene Zeitspanne und/oder für einen Zeitpunkt und/oder für einen Ort gelten.

Der Identifikationsnacheis oder der Berechtigungsnachweis kann insbesondere ein digitaler Nachweis sein. Dem Identifikationsnachweis oder dem Berechtigungsnachweis ist insbesondere jeweils ein Nachweisschema zugeordnet. Das Nachweisschema kann beispielsweise als Datenstruktur ausgestaltet sein. Das Nachweisschema beschreibt beispielsweise den Aufbau oder die Ausgestaltung eines jeweiligen Nachweises, d.h. das Nachweisschema umfasst eine Nachweisdefinition. Beispielsweise wird das Nachweisschema zusammen mit dem jeweiligen öffentlichen, kryptographischen Schlüssel in der verteilten Datenbank gespeichert und für eine Verifikation eines entsprechenden Nachweises genutzt. So kann das Nachweisschema insbesondere mit dem öffentlichen, kryptographischen Schlüssel gekoppelt/verlinkt sein.

Gemäß einer Ausführungsform ist vorgesehen, dass
- ein überprüfbarer Zugriffsmöglichkeitsnachweis für eine Zugriffsmöglichkeit auf das erste Gerät durch das erste Gerät bereitgestellt wird, wobei der überprüfbare Zugriffsmöglichkeitsnachweis von einer Ausstellungseinheit des verteilten Datenbanksystems ausgestellt ist,
- eine Authentizität und Integrität des überprüfbaren Zugriffsmöglichkeitsnachweises mittels eines dritten öffentlichen, kryptographischen Schlüssels und einem zugehörigen dritten Nachweisschemas oder mittels eines Zero-Knowledge-Beweises durch das verteilte Datenbanksystem verifiziert wird, wobei der dritte öffentliche, kryptographische Schlüssel in dem verteilten Datenbanksystem gespeichert ist,
- bei erfolgreicher Verifikation der Authentizität und Integrität des überprüfbaren Zugriffsmöglichkeitsnachweises überprüft wird, ob die Berechtigung des zweiten Geräts oder des Nutzers der Zugriffsmöglichkeit des ersten Geräts genügt und Ausgeben eines Prüfungsergebnisses,
   und
- der Zugriff auf das erste Gerät gemäß der Zugriffsmöglichkeit in Abhängigkeit des Prüfungsergebnisses gesteuert wird.

Dies ermöglicht beispielsweise, dass für das erste Gerät spezifiziert werden kann, für welche Zugriffe das Gerät ausgestaltet ist und/oder welche Zugriffe das Gerät erlaubt, ermöglicht und/oder anfragt. Beispielsweise kann ein Zugriffsmöglichkeitsnachweis spezifizieren, welche Art von Wartung für das erste Gerät vorgesehen ist oder welche Schnittstellen für einen Zugriff verfügbar sind.

Gemäß einer Ausführungsform ist vorgesehen, dass der Berechtigungsnachweis spezifiziert, für welchen Zugriff auf Schnittstellen und/oder Bedienweisen das zweite Gerät oder der Nutzer berechtigt und/oder qualifiziert ist.

Dadurch kann insbesondere im Detail spezifiziert werden, welche Berechtigungen das zweite Gerät bzw. der Nutzer hat.

Gemäß einer Ausführungsform ist vorgesehen, dass der Zugriffsmöglichkeitsnachweis spezifiziert, welche technische Zugriffsmöglichkeiten und/oder technische Voraussetzungen das erste Gerät aufweist.

Dadurch kann insbesondere der Zugriff granular gesteuert werden. Beispielsweise kann der Zugriffsmöglichkeitsnachweis lediglich die Schnittstellen angeben, die für einen Zugriff freigeschaltet werden können.

Gemäß einer Ausführungsform ist vorgesehen, dass der Zugriff auf das erste Gerät durch einen Smart Contract, der durch das verteilte Datenbanksystem ausgeführt wird, gesteuert wird.

Damit kann insbesondere die Zugriffssteuerung weiter automatisiert, schnell und sicherer gestaltet werden.

Gemäß einer Ausführungsform ist vorgesehen, dass der Zugriff auf das erste Gerät ein physikalischer oder ein logischer Zugriff ist.

Gemäß einer Ausführungsform ist vorgesehen, dass der überprüfbare Identifikationsnachweis und/oder der überprüfbare Zugriffsmöglichkeitsnachweis auf einem ersten Speichermodul, das dem ersten Gerät zugeordnet ist, gespeichert ist.

Gemäß einer Ausführungsform ist vorgesehen, der überprüfbare Berechtigungsnachweis auf einem zweiten Speichermodul, das dem zweiten Gerät zugeordnet ist, gespeichert ist.

Ein Speichermodul kann beispielsweise als Wallet oder als Digital Wallet ausgestaltet sein. Insbesondere wird das Speichermodul von dem jeweilig zugeordneten Gerät verwaltet, d.h. eine Freigabe/Ausgabe der Nachweise und/oder Daten, die auf dem Speichermodul gespeichert sind, werden von dem jeweiligen Gerät kontrolliert.

Gemäß einer Ausführungsform ist vorgesehen, dass das erste Gerät durch das zweite Gerät oder durch den Nutzer gesteuert wird.

Beispielsweise kann eine Funktionsweise des ersten Geräts gesteuert werden. Beispielsweise kann das erste Gerät auch gesteuert werden, um eine Wartung des Geräts, eine Aktualisierung, ein Datenabruf, oder ein Daten-Upload durchzuführen.

Beansprucht wird außerdem gemäß einer weiteren Lehre ein System zum Steuern eines Zugriffs auf ein erstes Gerät durch ein zweites Gerät oder einen Nutzer, umfassend:
- mindestens eine Ausstellungseinheit, die einem verteilten Datenbanksystem zugeordnet ist, wobei die Ausstellungseinheit derart eingerichtet ist,
   - einen überprüfbaren Identifikationsnachweis für das erste Gerät auszustellen und den überprüfbaren Identifikationsnachweis auszustellen, und/oder
   - einen überprüfbaren Berechtigungsnachweis für das zweite Gerät oder für den Nutzer auszustellen und den überprüfbaren Berechtigungsnachweis bereitzustellen,
- ein verteiltes Datenbanksystem,
- entweder eine erste Verifikationseinheit, die dem zweiten Gerät oder dem Nutzer zugeordnet und derart eingerichtet ist, die Identität des ersten Geräts anhand des Identifikationsnachweises und mittels eines ersten öffentlichen, kryptographischen Schlüssels und eines zugehörigen, ersten Nachweisschemas zu verifizieren, und eine zweite Verifikationseinheit, die dem ersten Gerät zugeordnet und derart eingerichtet ist, eine Authentizität und Integrität des überprüfbaren Berechtigungsnachweises mittels eines zweiten öffentlichen, kryptographischen Schlüssels und eines zugehörigen, zweiten Nachweisschemas zu verifizieren,
   oder eine dritte Verifikationseinheit, die durch das verteilte Datenbanksystem realisiert wird und derart eingerichtet ist, den Identifikationsnachweis und/oder den Berechtigungsnachweis mittels eines Zero-Knowledge-Beweises zu verifizieren,
   und
- eine Steuereinheit, die derart eingerichtet ist, einen Zugriff auf das erste Gerät durch das zweite Gerät oder den Nutzer bei erfolgreicher Verifikation der Identität des ersten Geräts und bei erfolgreicher Verifikation der Authentizität und Integrität des Berechtigungsnachweises zu steuern.

Beansprucht wird außerdem ein Computerprogrammprodukt, das direkt in einen programmierbaren Computer ladbar ist, umfassend Programmcodeteile, die dazu geeignet sind, die Schritte des Verfahrens nach einem der Ansprüche 1 bis 9 durchzuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Im Folgenden wird die Erfindung anhand einer lediglich Ausführungsbeispiele darstellenden Zeichnung näher erläutert. In der Zeichnung zeigt
- Fig. 1: ein erstes Ausführungsbeispiel der Erfindung;
- Fig. 2: ein zweites Ausführungsbeispiel der Erfindung; und
- Fig. 3: ein drittes Ausführungsbeispiel der Erfindung.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

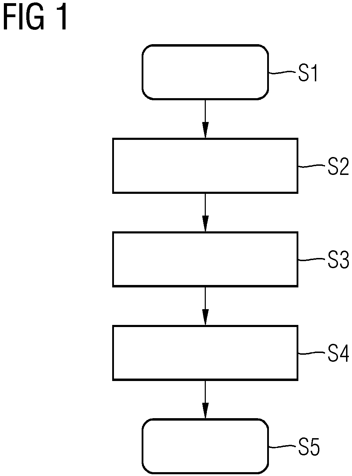

Figur 1 zeigt als ein erstes Ausführungsbeispiel der Erfindung ein Flussdiagramm, das die Verfahrensschritte eines computerimplementierten Verfahrens zum Steuern eines Zugriffs auf ein erstes Gerät durch ein zweites Gerät oder durch einen Nutzer abbildet.

Im ersten Schritt S1 des Verfahrens wird ein überprüfbarer Identifikationsnachweis des ersten Geräts durch das erste Gerät bereitgestellt. Beispielsweise kann das zweite Gerät oder der Nutzer den Identifikationsnachweis anfordern und/oder der Identifikationsnachweis wird in Folge einer Zugriffsanfrage auf das erste Gerät durch das zweite Gerät oder durch den Nutzer diesem bereitgestellt. Der überprüfbare Identifikationsnachweis ist insbesondere von einer Ausstellungseinheit eines verteilten Datenbanksystems ausgestellt. Die Ausstellungseinheit kann beispielsweise eine Zertifizierungsstelle, eine Organisation oder eine Behörde sein. Insbesondere kann die Ausstellungseinheit mit einem verteilten Datenbanksystem, wie z.B. einem Blockchain-Netzwerk, gekoppelt sein.

Der Identifikationsnachweis ist vorzugsweise mittels eines ersten privaten, kryptographischen Schlüssels durch die Ausstellungseinheit kryptographisch signiert. Der Identifikationsnachweis des ersten Geräts ist vorzugsweise in einem Speichermodul, wie z.B. einer Wallet, des ersten Geräts DEV1 gespeichert. Bei dem Identifikationsnachweis kann es sich insbesondere um einen Self-Sovereign-Identity-Nachweis handeln.

Im nächsten Schritt S2 des Verfahrens wird die Identität des ersten Geräts anhand des Identifikationsnachweises entweder durch das zweite Gerät oder durch den Nutzer oder durch das verteilte Datenbanksystem verifiziert.

Als erste Alternative, bei der Verifikation durch das zweite Gerät oder durch den Nutzer, wird der überprüfbare Identifikationsnachweis mittels eines ersten öffentlichen, kryptographischen Schlüssels und eines zugehörigen, ersten Nachweisschemas verifiziert, wobei der erste öffentliche, kryptographische Schlüssel dem ersten, privaten kryptographischen Schlüssel zugeordnet ist. Der öffentliche Schlüssel und das Nachweisschema sind in dem verteilten Datenbanksystem gespeichert. Dies ist die Alternative, falls der Identifikationsnachweis durch die Ausstellungseinheit mit einem ersten privaten Schlüssel signiert ist.

Als zweite Alternative kann der Identifikationsnachweis mittels eines Zero-Knowledge-Beweises durch das verteilte Datenbanksystem verifiziert werden. Dazu kann beispielsweise das zweite Gerät oder der Nutzer eine Verifikationsanfrage an das verteilte Datenbanksystem senden. Das verteilte Datenbanksystem prüft anschließend den Identifikationsnachweis und/oder lediglich eine Information über den Identifikationsnachweis mittels eines Zero-Knowledge-Beweis-Verfahrens und gibt eine Verifikationsbestätigung an das zweite Gerät oder an den Nutzer aus.

Im nächsten Schritt S3 des Verfahrens wird ein überprüfbarer Berechtigungsnachweis über eine Berechtigung des zweiten Geräts oder des Nutzers durch das zweite Gerät oder durch den Nutzer bereitgestellt. Der Berechtigungsnachweis wird von einer Ausstellungseinheit des verteilten Datenbanksystems ausgestellt, vorzugsweise mittels der Self-Sovereign-Identity-Methodik. Insbesondere wird der Berechtigungsnachweis gemäß einem zugeordneten Nachweisschemas von der Ausstellungseinheit ausgestellt. Bei dem überprüfbaren Berechtigungsnachweis kann es sich insbesondere um einen digitalen Nachweis (engl. verifiable credential) handeln. Der Berechtigungsnachweis kann mittels eines zweiten privaten, kryptographischen Schlüssels von der Ausstellungseinheit kryptographisch signiert sein. Der Berechtigungsnachweis spezifiziert beispielsweise, für welchen Zugriff auf Schnittstellen und/oder Bedienweisen eines Geräts das zweite Gerät oder der Nutzer berechtigt und/oder qualifiziert ist. Beispielsweise kann ein Berechtigungsnachweis ein Zeugnis oder Zertifikat über eine fachliche Qualifikation eines Nutzers, z.B. eines Servicetechnikers, sein. Es ist auch möglich, dass der Berechtigungsnachweis eine Zugriffsberechtigung des zweiten Geräts beschreibt, wie z.B. eine zeitabhängige Zugriffsmöglichkeit auf bestimmte Schnittstellen anderer Geräte.

Im nächsten Schritt S4 des Verfahrens wird eine Authentizität und Integrität des überprüfbaren Berechtigungsnachweises verifiziert. Beispielsweise kann die Authentizität und die Integrität des Berechtigungsnachweises mittels eines zweiten öffentlichen, kryptographischen Schlüssels und eines zugehörigen, zweiten Nachweisschemas verifiziert werden. In anderen Worten, die Signatur des Berechtigungsnachweises wird derart geprüft. Diese Verifikation kann insbesondere vom zweiten Gerät oder dem Nutzer durchgeführt werden. Der zweite öffentliche, kryptographische Schlüssel ist dabei in dem verteilten Datenbanksystem gespeichert und dem zweiten privaten, kryptographischen Schlüssel zugeordnet.

Alternativ kann die Authentizität und die Integrität des Berechtigungsnachweises mittels eines Zero-Knowledge-Beweises durch das verteilte Datenbanksystem verifiziert werden.

Im nächsten Schritt S5 des Verfahrens wird ein Zugriff auf das erste Gerät bei erfolgreicher Verifikation der Identität des ersten Geräts und bei erfolgreicher Verifikation der Authentizität und Integrität des Berechtigungsnachweises des zweiten Geräts oder des Nutzers gesteuert. Beispielsweise wird die Zugriffsanfrage des zweiten Geräts oder des Nutzers akzeptiert und/oder eine Schnittstelle des ersten Geräts wird für den Zugriff freigegeben.

Anschließend kann das zweite Gerät oder der Nutzer auf das das erste Gerät zugreifen und dieses beispielsweise steuern. Der Zugriff auf das erste Gerät kann beispielsweise ein logischer oder ein physikalischer Zugriff sein. Insbesondere kann das zweite Gerät oder der Nutzer lediglich gemäß seiner Berechtigung auf das erste Gerät zugreifen und dieses steuern.

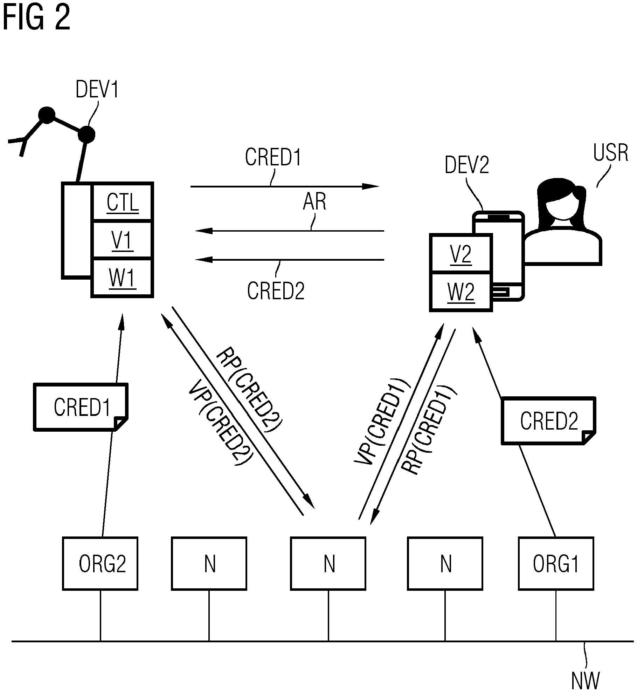

Figur 2 zeigt schematisch ein zweites Ausführungsbeispiel der Erfindung. Es ist ein System zum Steuern eines Zugriffs auf ein erstes Gerät DEV1 durch ein zweites Gerät DEV2 oder durch einen Nutzer USR dargestellt.

Das System umfasst ein verteiltes Datenbanksystem NW, das eine Vielzahl von miteinander gekoppelten Knoten N umfasst. Außerdem umfasst das System mindestens eine Ausstellungseinheit ORG1, ORG2, die derart eingerichtet ist, Nachweise, wie z.B. Identifikationsnachweise CRED1, auszustellen und vorzugsweise mittels eines privaten, kryptographischen Schlüssels zu signieren und einem Gerät oder einem Nutzer USR bereitzustellen. Das System umfasst weiter mindestens eine Verifikationseinheit. Entweder ist die Verifikationseinheit durch das verteilte Datenbanksystem NW realisiert oder das erste Gerät DEV1 und/oder das zweite Gerät DEV2 umfasst eine Verifikationseinheit V1, V2. Außerdem umfasst das System eine Steuereinheit CTL, die beispielsweise dem ersten Gerät zugeordnet ist. Die Steuereinheit CTL kann auch durch einen Smart Contract, der von den Knoten N des verteilten Datenbanksystems NW ausgeführt wird, realisiert werden.

Das erste Gerät DEV1 ist beispielsweise eine Werkzeugmaschine oder ein Industrieroboter. Das zweite Gerät DEV2 kann beispielsweise ein Servicegerät sein, das durch einen Nutzer USR, z.B. einen Servicetechniker, bedient wird. Außerdem können sowohl das erste Gerät DEV1 als auch das zweite Gerät DEV2 mindestens einen Prozessor umfassen.

Der Nutzer USR oder das zweite Gerät DEV2 können beispielsweise eine Zugriffsanfrage AR an das erste Gerät DEV1 schicken. Das erste Gerät DEV1 kann einen Identifikationsnachweis CRED1 an das zweite Gerät DEV2 oder den Nutzer USR übermitteln, um diesem eine eindeutige Identifikation des ersten Geräts DEV1 zu ermöglichen.

Der Identifikationsnachweis CRED1 ist vorzugsweise auf einem ersten Speichermodul W1, das dem ersten Gerät zugeordnet ist, gespeichert. Beispielsweise handelt es sich hierbei um eine Wallet W1. Der Identifikationsnachweis CRED1 wird beispielsweise von einer Ausstellungseinheit ORG1, ORG2, die mit dem verteilten Datenbanksystem gekoppelt ist, ausgestellt.

Das zweite Gerät DEV2 oder der Nutzer USR kann den Identifikationsnachweis CRED1 verifizieren. Dazu schickt das zweite Gerät DEV2 oder der Nutzer USR eine Verifikationsanfrage RP(CRED1) zur Überprüfung des Identifikationsnachweises CRED1 an das verteilte Datenbanksystem NW. Das verteilte Datenbanksystem NW kann mittels eines Zero-Knowledge-Beweises den Identifikationsnachweis CRED1 verifizieren und einen entsprechenden Verifikationsnachweis VP(CRED1) über die Verifikation des Identifikationsnachweises CRED1 an das zweite Gerät DEV2 oder den Nutzer USR übermitteln.

Alternativ kann das zweite Gerät DEV2 oder der Nutzer USR, falls der Identifikationsnachweis CRED1 mit einem ersten privaten, kryptographischen Schlüssel von einer Ausstellungseinheit ORG1, ORG2 signiert wurde, einen dem ersten privaten Schlüssel zugeordneten ersten öffentlichen, kryptographischen Schlüssel vom verteilten Datenbanksystem anfordern oder abrufen. Zusätzlich benötigt das zweite Gerät DEV2 oder der Nutzer USR ein Nachweisschema, das dem Identifikationsnachweis CRED1 zugeordnet ist. Sowohl der öffentliche Schlüssel als auch das Nachweisschema sind in dem verteilten Datenbanksystem gespeichert. Das zweite Gerät DEV2 oder der Nutzer USR können mittels des öffentlichen Schlüssels und des zugehörigen Nachweisschemas den Identifikationsnachweis CRED1 des ersten Geräts DEV1 verifizieren.

Das zweite Gerät DEV2 oder der Nutzer USR stellen einen überprüfbaren Berechtigungsnachweis CRED2 bereit. Der Berechtigungsnachweis CRED2 definiert beispielsweise für welchen Zugriff auf Schnittstellen und/oder Bedienweisen das zweite Gerät DEV2 oder der Nutzer USR berechtigt, qualifiziert und/oder konfiguriert ist. Die Authentizität und Integrität des Berechtigungsnachweises CRED2 kann vom ersten Gerät verifiziert werden. Dies kann entweder mittels eines Zero-Knowledge-Beweises durch das verteilte Datenbanksystem NW oder mittels eines entsprechenden öffentlichen, kryptographischen Schlüssels und eines zugehörigen Nachweisschemas erfolgen.

Falls der Identifikationsnachweis CRED1 und der Berechtigungsnachweis CRED2 beide erfolgreich verifiziert wurden, kann die Steuereinheit CTL den Zugriff auf das erste Gerät DEV1 für das zweite Gerät DEV2 oder den Nutzer USR freigeben. Beispielsweise kann der Nutzer USR Zugriff auf eine Schnittstelle des ersten Geräts DEV1 erhalten, um beispielsweise Daten vom ersten Gerät auszulesen oder Daten auf das erste Gerät zu laden. Insbesondere kann durch den Berechtigungsnachweis CRED2 gesteuert sein, auf welche Daten des ersten Geräts der Nutzer USR zugreifen kann.

Alternativ kann der Zugriff auch durch einen Smart Contract, der von den Knoten N des verteilten Datenbanksystems NW ausgeführt wird, gesteuert und verwaltet werden.

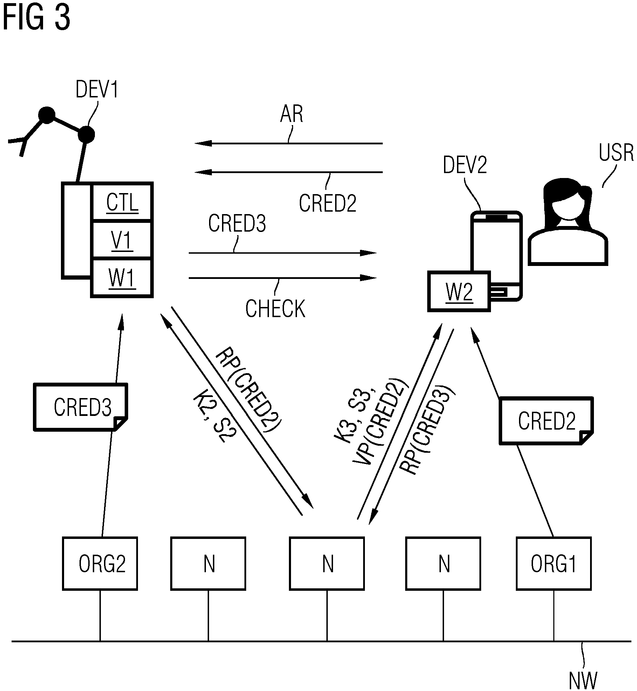

Figur 3 zeigt schematisch ein weiteres Ausführungsbeispiel der Erfindung. Es ist ein System zur Steuerung eines Zugriffs auf ein erstes Gerät durch ein zweites Gerät oder durch einen Nutzer.

Das System umfasst ein verteiltes Datenbanksystem, mindestens eine Ausstellungseinheit, die mit dem verteilten Datenbanksystem, wie z.B. ein Blockchain-System, gekoppelt ist, mindestens einer Verifikationseinheit und einer Steuereinheit.

Die Zugriffssteuerung wird insbesondere mittels Self-Sovereign-Identities und überprüfbaren (digitalen) Nachweisen sowohl für das erste Gerät als auch für das zweite Gerät und/oder den Nutzer durchgeführt. Insbesondere umfassen die Nachweise Berechtigungsnachweise und Zugriffsmöglichkeitsnachweise. Diese werden mit dem Blockchain-Netzwerk kombiniert, um Informationen über einen Zugriff manipulationssicher zu speichern. Insbesondere kann eine Information über einen erfolgten Zugriff und/oder eine Zugriffsanfragen in der Blockchain gespeichert werden. Außerdem kann die Zugriffssteuerung mittels eines Smart Contracts, der vom Blockchain-System ausgeführt wird, gesteuert werden.

Wie beispielhaft anhand Figur 1 gezeigt, kann ein Identifikationsnachweis des ersten Geräts durch das zweite Gerät oder durch den Nutzer verifiziert werden, so dass eine eindeutige Identifizierung des ersten Geräts sichergestellt ist. Dies ist beispielsweise vorteilhaft, wenn eine Vielzahl gleichartiger Geräte zur Verfügung steht und lediglich ein bestimmtes davon gesteuert werden soll.

Das zweite Gerät DEV2 oder der Nutzer USR kann eine Zugriffsanfrage AR an das erste Gerät DEV1 übermitteln. Zusätzlich kann das zweite Gerät DEV2 oder der Nutzer USR einen Berechtigungsnachweis CRED2 an das erste Gerät übermitteln. Der Berechtigungsnachweis CRED2 ist vorzugsweise von einer Ausstellungseinheit ORG1 ausgestellt. Beispielsweise ist der Berechtigungsnachweis mit einem privaten, kryptographischen Schlüssel signiert. Der Berechtigungsnachweis ist auf einem Speichermodul W2, das dem zweiten Gerät oder dem Nutzer zugeordnet ist, gespeichert. Ein zugehöriger öffentlicher, kryptographischer Schlüssel K2, der dem privaten Schlüssel zugeordnet ist, ist im verteilten Datenbanksystem gespeichert. Ebenso wird ein Nachweisschema S2, das dem Berechtigungsnachweis CRED2 zugeordnet ist und dessen Aufbau und Inhalt spezifiziert, im verteilten Datenbanksystem gespeichert.

Das erste Gerät DEV1 kann mittels einer Verifikationseinheit V1 die Authentizität und Integrität des Berechtigungsnachweises verifizieren. Dazu kann es eine Verifikationsanfrage RP(CRED2) an das verteilte Datenbanksystem schicken und beispielsweise den zugehörigen öffentlichen, kryptographischen Schlüssel K2 und das zugehörige Nachweisschema S2 des Berechtigungsnachweises CRED2 anfordern. Die Signatur des Berechtigungsnachweises kann dann von der Verifikationseinheit V1 mittels des öffentlichen Schlüssels K2 verifiziert werden. Mittels des Nachweisschemas S2 kann insbesondere überprüft werden, ob der Aufbau des Berechtigungsnachweises CRED2 den darin beschriebenen Vorgaben entspricht.

Das erste Gerät DEV1 kann außerdem einen überprüfbaren Zugriffsmöglichkeitsnachweis CRED3 für eine Zugriffsmöglichkeit auf das erste Gerät bereitstellen. Der überprüfbare Zugriffsmöglichkeitsnachweis CRED3 ist von einer Ausstellungseinheit ORG1, ORG2 des verteilten Datenbanksystems NW ausgestellt, vorzugsweise mittels der Self-Sovereign-Identity-Methode, und kann in einem ersten Speichermodul W1, das dem ersten Gerät zugeordnet ist, gespeichert sein. So kann das erste Gerät DEV1 beispielsweise kontrollieren, welche Zugriffsmöglichkeiten einem zweiten Gerät DEV2 oder einem Nutzer USR bereitgestellt werden sollen. Bei dem überprüfbaren Zugriffsmöglichkeitsnachweis CRED3 kann es sich insbesondere um einen digitalen Nachweis (engl. Verifiable Credential) handeln.

Der Zugriffsmöglichkeitsnachweis CRED3 kann dem zweiten Gerät DEV2 oder dem Nutzer URS übermittelt werden. Vorzugsweise ist der Zugriffsmöglichkeitsnachweis CRED3 mittels eines dritten privaten, kryptographischen Schlüssels signiert. Der Zugriffsmöglichkeitsnachweis CRED3 spezifiziert, welche technische Zugriffsmöglichkeiten und/oder technische Voraussetzungen das erste Gerät aufweist. Beispielsweise kann der Zugriffsmöglichkeitsnachweis Schnittstellen oder Software-Versionen spezifizieren, die das erste Gerät DEV1 aufweist. Insbesondere können mehrere Zugriffsmöglichkeiten durch den Zugriffsmöglichkeitsnachweis spezifiziert werden, die von einem zweiten Gerät oder einem Nutzer genutzt werden können.

Das zweite Gerät oder der Nutzer können eine Authentizität und Integrität des überprüfbaren Zugriffsmöglichkeitsnachweises CRED3 mittels eines dritten öffentlichen, kryptographischen Schlüssels K3 und eines zugehörigen dritten Nachweisschemas S3 verifizieren. Alternativ kann das zweite Gerät oder der Nutzer eine Verifikationsanfrage RP(CRED3) an das verteilte Datenbanksystem senden, um einen Verifikationsnachweis über den Berechtigungsnachweis zu erhalten. In diesem Fall kann der Zugriffsmöglichkeitsnachweismittels eines Zero-Knowledge-Beweises durch das verteilte Datenbanksystem verifiziert werden.

Bei erfolgreicher Verifikation der Authentizität und Integrität des überprüfbaren Zugriffsmöglichkeitsnachweises CRED3 kann überprüft werden, ob die Berechtigung des zweiten Geräts oder des Nutzers der Zugriffsmöglichkeit des ersten Geräts genügt. Beispielsweise wird überprüft, ob das zweite Gerät oder der Nutzer berechtigt ist, auf eine zur Verfügung stehende Schnittstelle des ersten Geräts zuzugreifen. Der Zugriff auf das erste Gerät DEV1 wird gemäß der Zugriffsmöglichkeit in Abhängigkeit des Prüfungsergebnisses CHECK durch die Steuereinheit CTL gesteuert und freigegeben.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zum Steuern eines Zugriffs auf ein erstes Gerät (DEV1) durch ein zweites Gerät (DEV2) oder durch einen Nutzer (USR)
mit folgenden Verfahrensschritten:
a) Bereitstellen eines überprüfbaren Identifikationsnachweises (CRED1) des ersten Geräts (DEV1) durch das erste Gerät (DEV1), wobei der überprüfbare Identifikationsnachweis (CRED1) von einer Ausstellungseinheit (ORG1, ORG2) eines verteilten Datenbanksystems (NW) ausgestellt ist,
b) Verifizieren der Identität des ersten Geräts (DEV1) anhand des Identifikationsnachweises (CRED1)
- durch das zweite Gerät (DEV2) oder durch den Nutzer (USR), wobei der überprüfbare Identifikationsnachweis (CRED1) mittels eines ersten öffentlichen, kryptographischen Schlüssels und eines zugehörigen, ersten Nachweisschemas verifiziert wird, wobei der erste öffentliche, kryptographische Schlüssel in dem verteilten Datenbanksystem gespeichert ist,
- oder mittels eines Zero-Knowledge-Beweises durch das verteilte Datenbanksystem (NW),
c) Bereitstellen eines überprüfbaren Berechtigungsnachweises (CRED2) über eine Berechtigung des zweiten Geräts (DEV2) oder des Nutzers (USR) durch das zweite Gerät (DEV2) oder durch den Nutzer (USR), wobei der Berechtigungsnachweis (CRED2) von einer Ausstellungseinheit (ORG1, ORG2) des verteilten Datenbanksystems (NW) ausgestellt ist,
d) Verifizieren einer Authentizität und Integrität des überprüfbaren Berechtigungsnachweises (CRED2) mittels eines zweiten öffentlichen, kryptographischen Schlüssels und eines zugehörigen, zweiten Nachweisschemas, wobei der zweite öffentliche, kryptographische Schlüssel in dem verteilten Datenbanksystem gespeichert ist, oder mittels eines Zero-Knowledge-Beweises durch das verteilte Datenbanksystem (NW),
und
e) Steuern eines Zugriffs auf das erste Gerät (DEV1) bei erfolgreicher Verifikation der Identität des ersten Geräts (DEV1) und bei erfolgreicher Verifikation der Authentizität und Integrität des Berechtigungsnachweises (CRED2) des zweiten Geräts (DEV2) oder des Nutzers (USR).

2. Computerimplementiertes Verfahren nach Anspruch 1, wobei
- ein überprüfbarer Zugriffsmöglichkeitsnachweis (CRED3) für eine Zugriffsmöglichkeit auf das erste Gerät (DEV1) durch das erste Gerät (DEV1) bereitgestellt wird, wobei der überprüfbare Zugriffsmöglichkeitsnachweis (CRED3) von einer Ausstellungseinheit (ORG1, ORG2) des verteilten Datenbanksystems (NW) ausgestellt ist,
- eine Authentizität und Integrität des überprüfbaren Zugriffsmöglichkeitsnachweises (CRED3) mittels eines dritten öffentlichen, kryptographischen Schlüssels und einem zugehörigen dritten Nachweisschemas oder mittels eines Zero-Knowledge-Beweises durch das verteilte Datenbanksystem (NW) verifiziert wird, wobei der dritte öffentliche, kryptographische Schlüssel in dem verteilten Datenbanksystem gespeichert ist,
- bei erfolgreicher Verifikation der Authentizität und Integrität des überprüfbaren Zugriffsmöglichkeitsnachweises (CRED3) überprüft wird, ob die Berechtigung des zweiten Geräts (DEV2) oder des Nutzers (USR) der Zugriffsmöglichkeit des ersten Geräts (DEV1) genügt und Ausgeben eines Prüfungsergebnisses (CHECK),
und
- der Zugriff auf das erste Gerät (DEV1) gemäß der Zugriffsmöglichkeit in Abhängigkeit des Prüfungsergebnisses (CHECK) gesteuert wird.

3. Computerimplementiertes Verfahren nach Anspruch 1 oder 2, wobei der Berechtigungsnachweis (CRED2) spezifiziert, für welchen Zugriff auf Schnittstellen und/oder Bedienweisen das zweite Gerät (DEV2) oder der Nutzer (USR) berechtigt und/oder qualifiziert ist.

4. Computerimplementiertes Verfahren nach Anspruch 2, wobei der Zugriffsmöglichkeitsnachweis (CRED3) spezifiziert, welche technische Zugriffsmöglichkeiten und/oder technische Voraussetzungen das erste Gerät (DEV1) aufweist.

5. Computerimplementiertes Verfahren nach einem der vorhergehenden Ansprüche, wobei der Zugriff auf das erste Gerät (DEV1) durch einen Smart Contract, der durch das verteilte Datenbanksystem (NW) ausgeführt wird, gesteuert wird.

6. Computerimplementiertes Verfahren nach einem der vorhergehenden Ansprüche, wobei der Zugriff auf das erste Gerät (DEV1) ein physikalischer oder ein logischer Zugriff ist.

7. Computerimplementiertes Verfahren nach einem der vorhergehenden Ansprüche, wobei der überprüfbare Identifikationsnachweis (CRED1) und/oder der überprüfbare Zugriffsmöglichkeitsnachweis (CRED3) auf einem ersten Speichermodul (W1), das dem ersten Gerät zugeordnet ist, gespeichert ist.

8. Computerimplementiertes Verfahren nach einem der vorhergehenden Ansprüche, wobei der überprüfbare Berechtigungsnachweis (CRED2) auf einem zweiten Speichermodul (W2), das dem zweiten Gerät zugeordnet ist, gespeichert ist.

9. Computerimplementiertes Verfahren nach einem der vorhergehenden Ansprüche, wobei das erste Gerät (DEV1) durch das zweite Gerät (DEV2) oder durch den Nutzer (USR) gesteuert wird.

10. System zum Steuern eines Zugriffs auf ein erstes Gerät (DEV1) durch ein zweites Gerät (DEV2) oder einen Nutzer (USR),
umfassend:
- mindestens eine Ausstellungseinheit (ORG1, ORG2), die einem verteilten Datenbanksystem zugeordnet ist, wobei die Ausstellungseinheit (ORG1, ORG2) derart eingerichtet ist,
- einen überprüfbaren Identifikationsnachweis (CRED1) für das erste Gerät (DEV1) auszustellen und den überprüfbaren Identifikationsnachweis (CRED1) auszustellen,
und/oder
- einen überprüfbaren Berechtigungsnachweis (CRED2) für das zweite Gerät (DEV2) oder für den Nutzer (USR) auszustellen und den überprüfbaren Berechtigungsnachweis (CRED2) bereitzustellen,
- ein verteiltes Datenbanksystem (NW),
- entweder eine erste Verifikationseinheit (V1), die dem zweiten Gerät oder dem Nutzer (USR) zugeordnet und derart eingerichtet ist, die Identität des ersten Geräts (DEV1) anhand des Identifikationsnachweises (CRED1) und mittels eines ersten öffentlichen, kryptographischen Schlüssels und eines zugehörigen, ersten Nachweisschemas zu verifizieren, und eine zweite Verifikationseinheit (V2), die dem ersten Gerät zugeordnet und derart eingerichtet ist, eine Authentizität und Integrität des überprüfbaren Berechtigungsnachweises (CRED2) mittels eines zweiten öffentlichen, kryptographischen Schlüssels und eines zugehörigen, zweiten Nachweisschemas zu verifizieren, oder eine dritte Verifikationseinheit, die durch das verteilte Datenbanksystem (NW) realisiert wird und derart eingerichtet ist, den Identifikationsnachweis (CRED1) und/oder den Berechtigungsnachweis (CRED2) mittels eines Zero-Knowledge-Beweises zu verifizieren,
und
- eine Steuereinheit (CTL), die derart eingerichtet ist, einen Zugriff auf das erste Gerät (DEV1) durch das zweite Gerät (DEV2) oder den Nutzer (USR) bei erfolgreicher Verifikation der Identität des ersten Geräts (DEV1) und bei erfolgreicher Verifikation der Authentizität und Integrität des Berechtigungsnachweises (CRED2) zu steuern.

11. Computerprogrammprodukt, das direkt in einen programmierbaren Computer ladbar ist, umfassend Programmcodeteile, die dazu geeignet sind, die Schritte des Verfahrens nach einem der Ansprüche 1 bis 9 durchzuführen.
